## Europäisches Patentamt

## European Patent Office

## Office européen des brevets

(19)

(11) Veröffentlichungsnummer: **0 290 469 B1**

# EUROPÄISCHE PATENTSCHRIFT

(45) Veröffentlichungstag der Patentschrift:
**15.05.91 Patentblatt 91/20**

(51) Int. Cl.⁵ : **B23K 37/02,** B23Q 3/157

(21) Anmeldenummer : **87901268.0**

(22) Anmeldetag : **20.12.86**

(86) Internationale Anmeldenummer :
**PCT/EP86/00774**

(87) Internationale Veröffentlichungsnummer :
**WO 87/03835 02.07.87 Gazette 87/14**

(54) **VORRICHTUNG ZUM AUTOMATISCHEN BEARBEITEN UNTERSCHIEDLICH GEFORMTERWERKSTÜCKE.**

(30) Priorität : **21.12.85 DE 3545537**

(43) Veröffentlichungstag der Anmeldung :
**17.11.88 Patentblatt 88/46**

(45) Bekanntmachung des Hinweises auf die
Patenterteilung :
**15.05.91 Patentblatt 91/20**

(84) Benannte Vertragsstaaten :
**DE FR GB IT**

(56) Entgegenhaltungen :
**DE-A- 3 149 864**

(73) Patentinhaber : **AUDI AG
Auto-Union-Strasse 1 Postfach 220
W-8070 Ingolstadt (DE)**

(72) Erfinder : **MÜLLER, Karl-Heinz
Schillerstr. 66
W-8070 Ingolstadt (DE)**
Erfinder : **RIEDL, Volker
St. Wendelin 5
W-8074 Gaimersheim (DE)**
Erfinder : **ARBESMEIER, Bernhard
Ottostr. 3
W-8426 Altmannstein/Hagenhill (DE)**

(74) Vertreter : **Engelhardt, Harald
Audi AG Postfach 2 20
W-8070 Ingolstadt (DE)**

EP 0 290 469 B1

## Beschreibung

Die Erfindung bezieht sich auf eine Vorrichtung zum automatischen Bearbeiten unterschiedlich geformter Werkstücke.

In der Praxis eingesetzte Vorrichtungen bestehen aus einem Gestell mit unterschiedlichen Werkzeugen, die je nach dem vorliegenden Programm wahlweise in Einsatz gebracht werden. Es ist weiterhin bekannt, mehrere derartige Vorrichtungen nacheinander anzuordnen und dabei den Teiletransport durch Zischenförderer durchzuführen.

Aus der DE-A1 3 149 864 ist eine Schweißvorrichtung bekannt, die für die Bearbeitung unterschiedlich ausgeführter Fahrzeugkarosserien umgerüstet werden kann. Die Vorrichtung umfaßt eine Rahmenkonstruktion mit einer Transportvorrichtung für wenigsten zwei Schweißeinheiten, eine Transportvorrichtung zur Aufnahme von Werkstücken und eine Hubeinrichtung zum Anheben oder Absenken der unteren Transportvorrichtung. Durch die Transportvorrichtung sind die Werkstücke und die Schweißeinheiten in Querrichtung der Rahmenkonstruktion zwischen einer vorgegebenen Betriebsstellung innerhalb der Rahmenkonstruktion und einer am seitlichen Rand der Rahmenkonstruktion gelegenen Ruhestellung beweglich. Die bekannte Montagevorrichtung besteht also aus einer stationären Rahmenkonstruktion mit der Möglichkeit eines automatischen Werkzeugwechsels.

Der Erfindung liegt die Aufgabe zugrunde, eine gattungsgemäße Vorrichtung so weiterzubilden, daß ein schneller Wechsel der kompletten Werkzeuge und der Werkstückaufnhame möglich ist, die Werkzeuge extern auf ein neues Werkstück eingearbeitet werden können, und wobei trotz der Möglichkeit der Anpassung an sehr unterschiedlich geformte Werkstücke für die Vorrichtung viele Gleichteile einsetzbar sind.

Die Aufgabe wird durch den Gegenstand des Anspruchs 1 gelöst.

Die Vorrichtung besteht aus einem Untergestell und baugleichen Werkzeuggestellen, welche auf das Untergestell nur aufgesetzt werden und dort entlang einer Längsführung wahlweise in eine mittlere Arbeitsposition verschiebbar sind. In dieser Arbeitsposition werden dem Werkzeuggestell die Werkstücke zugeführt und durch die im Werkzeuggestell angeordneten unterschiedlichsten Werkzeuge bearbeitet. Liegt ein anders geformtes Werkstück vor oder soll ein gleichartiges Werkstück in anderer Weise bearbeitet werden, dann wird das Werkzeuggestell auf eine Seite bewegt und von der anderen Seite her das nunmehr benötigte Werkzeuggestell in die Arbeitsposition verschoben. Durch diese Ausbildung ist es möglich, auch bei stark unterschiedlich geformten Werkstücken oder abweichenden Bearbeitungsvorgängen die Werkzeuge sehr schnell zu wechseln. Werden in einer Fertigungsstraße mehrere Vorrichtungen nacheinander angeordnet oder auch derartige Vorrichtungen an verschiedenen Stellen oder bei verschiedenen Herstellern eingesetzt, dann können dafür stets die gleichen Untergestelle und die gleichen Werkzeuggestelle Verwendung finden, wodurch die Herstellungskosten stark reduziert werden. Die einzelnen Werkzeuggestelle werden nur mit unterschiedlichen Werkzeugen bestückt. Von großem Vorteil ist dabei, daß es möglich ist, die Werkzeuge extern einzuarbeiten, so daß diese Zeit nicht in der Produktionsanlage anfällt. Ein Einfahren von neuen Werkzeugen bzw. deren Anordnung in Verbindung mit einem neuen Teil ist in der Fertigungslinie nicht mehr erforderlich. Die Werkzeuggestelle lassen sich leicht mittels Kran oder Gabelstapler auswechseln, da im Gegensatz zu den bekannten Einrichtungen eine vollständige Trennung zwischen dem Gestell und den Werkzeugen gegeben ist.

Die erfindungsaemäße Vorrichtung läßt sich besonders vorteilhaft bei Punktschweißvorgängen mittels Zangen oder Fertigungsabläufen mit geringem Gegendruck einsetzen. Beim Arbeiten mit a großen Drücken ist ein Abstecken angebracht. Obwohl die erfindungsgemäße Vorrichtung vom Prinzip her für Teile der unterschiedlichsten Größenordnungen verwendbar ist, bewährt sie sich besonders bei mittelgroßen Teilen. Im Gegensatz zu den bekannten, als Einheit ausgebildeten Vorrichtungen, insbesondere Schweißvorrichtungen, ist hier die vollständige Wiederverwertbarkeit des Untergestells, der Werkzeuggestelle und der Fördereinrichtung gegeben. Für eine Ersatzteilfertigung ist es möglich, daß sogar Werkzeuggestelle mit den darin fixierten Werkzeugen ohne Probleme weiterverwendet werden können.

Das Bewegen der Werkzeuggestelle in ihre Arbeitsposition über den mittleren Abschnitt des Untergestells erfolgt durch eine Verfahreinheit, für die verschiedene Einrichtungen denkbar sind. Als vorteilhaft hat sich eine pneumatische Einrichtung mit kolbenstangenlosen Zylinder erwiesen, welche auch Hübe von über 2 m ermöglichen.

Gemäß einem weiteren Merkmal der Erfindung werden die Werkzeuggestelle in ihrer Stellung über dem mittleren Abschnitt des Untergestells (Arbeitsposition) durch eine Zentriereinheit zunächst zentriert und dann mittels einer Spanneinheit befestigt.

Die Werkzeuggestelle selbst setzen sich aus einer Grundplatte und einer Kopfplatte zusammen, welche durch Säulen miteinander verbunden sind. Die Werkzeuge sind an der Kopfplatte und/oder an den Säulen befestigt. Um das Bestücken und Entnehmen der Werkstücke reibungslos zu gestalten und um mehrere Vorrichtungen nacheinander zu kombinieren, ist es zweckmäßig, wenn die Werkstücke von einer Seite her durch die Vorrichtung durchgeführt wer den können. Die dadurch geschaffene freie Zugänglichkeit ermöglicht nicht nur ein verbessertes Einlegen und Herausnehmen der Werkstücke, sondern erleichtert auch Wartungsarbeiten, beispielsweise das Auswechseln von Elektrodenkappen.

In der Grundplatte des Werkzeuggestells ist eine Aussparung vorgesehen, in welche die Bodenplatte eines Werkstückhalters eingesetzt ist. Im Bereich dieser Bodenplatte ist im mittleren Abschnitt des Untergestells ein Ausheber angeordnet. Ein den Ausheber nach oben abschließender Tisch ist mit der Bodenplatte des Werkstückhalters durch eine Zentrier- und Spanneinrichtung verbindbar. Durch die beiden Zentrier- und Spanneinrichtungen, einmal zur Festlegung des Werkzeuggestelles am Untergestell und zum andern des Werkstückhalters am Ausheber, wird eine genaue Zuordnung geschaffen, welche ein präzises Arbeiten ermöglicht.

Der mit der Bodenplatte des Werkstückhalters verbundene Tisch ist durch einen gesteuerten Antrieb (z.B. Drehstromflachgetriebemotor) von einer unteren Einlegeposition in eine obere, ein Einwirken der Werkzeuge auf das Werkstück ermöglichende Bearbeitungsposition bewegbar. In umgekehrter Richtung ist der Werkstückschalter so weit abhebbar, daß bei gelösten Zentrierungen und Spanneinrichtungen ein Verschieben der Werkzeuggestelle auf der Längsführung über den Tisch hinweg möglich ist.

Durch den Gegenstand der Erfindung ist eine Vorrichtung geschaffen, durch welche in wirtschäftlicher Weise eine verbesserte Anpassung an unterschiedliche Werkstücke, ein schneller Werkzeugwechsel und eine optimale Einarbeitung außerhalb der Fertigungslinie unter Bertriebsbedingungen möglich ist.

Besonders vorteilhaft ist, wenn die Vorrichtung ein weiteres Werkzeuggestell umfaßt und zum wahlweisen Einsatz der drei Werkzeuggestelle das Untergestell und die Verfahreinheit über den linken und den rechten Abschnitt zur Bildung einer zusätzlichen Standfläche für ein Werkzeuggestell hinaus verlängert ist. Zweckmäßig sind dabei die einzelnen Abschnitte U-förmig angeordnet. Durch diese Anordnung ist es möglich, drei Werkzeuggestelle wahlweise einzusetzen. Es ist natürlich auch möglich, durch Vergrößerung des Untergestells die Anzahl der wahlweise verwendbaren Werkzeuggestelle zu erhöhen ; dies ist jedoch mit keinen zusätzlichen Vorteilen verbunden, so daß es sich anbietet, eine Verkettung mehrerer Vorrichtungen nacheinander unter Zwischenschaltung von Fördereinrichtungen vorzusehen.

Vorteilhaft ist jedoch der Einsatz von drei Varianten, entweder alleinstehend oder in Verknüpfung zueinander. Die erste Variante besteht darin, daß nur der mittlere Abschnitt des Untergestells und ein darauf aufgesetztes Werkzeuggestell vorgesehen ist. Hier besteht keine Werkzeuggestell-Wechselmöglichkeit ; der Vorteil dieser Vorrichtung besteht jedoch darin, daß in Verbindung mit anderen Vorrichtungen eine Wechselmöglichkeit für die Werkzeuggestelle besteht und diese Vorrichtung mit anderen verknüpft werden kann.

Die zweite Variante beinhaltet ein Untergestell mit einem mittleren, einen linken und einen rechten Abschnitt, welche in Reihe nebeneinander angeordnet sind und zwei Werkzeuggestelle zum wahlweisen Einsatz vorsehen.

Die dritte Variante besteht aus einem mittleren Abschnitt und je zwei linken und zwei rechten Abschnitten, nebeneinander oder in U-Form angeordnet. Diese Variante gestattet den alternativen Einsatz von drei Werkzeuggestellen.

Bei allen Varianten können die gleichen Werkzeuggestelle eingesetzt und untereinander ausgetauscht werden. Darüberhinaus läßt sich stets auch der mittlere Abschnitt mit dem Ausheber für alle Varianten einsetzen. Auch die äußeren Abschnitte gemäß der Varianten 2 und 3 sind zweckmäßig gleiche Elemente, welche durch geeignete Verbindungsmittel zusammengefügt sind.

Besonders vorteilhaft ist, wenn jedes Werkzeuggestell mit einer eigenen Fördereinrichtung versehen ist, durch welche das Werkstück selbsttätig aufnehmbar und/oder in den Werkstückhalter einlegbar und nach erfolgter Bearbeitung aus der Vorrichtung herausbewegbar ist. Gemäß einer vorteilhaften Weiterbildung dieses Merkmals kann jedes Werkzeuggestell einen eigenen Antrieb für die an ihm angeordnete Fördereinrichtung aufweisen. Durch die Fördereinrichtung, für welche an sich bekannte Einrichtungen Verwendung finden können, läßt sich ein Werkstück vor der Vorrichtung aufnehmen, in den Werkstückhalter einlegen und nach erfolgter Bearbeitung aus der Vorrichtung herausbewegen. Dabei ist eine vollautomatische Förderung möglich, nämlich wenn die Fördervorrichtung des Werkzeuggestells das Werkstück von einem anderen Förderer übernimmt und nach der Bearbeitung wiederum auf eine Fördereinrichtung auflegt. Bei Koppelung mehrerer erfindungsgemäßer Vorrichtungen ist es auch möglich, daß der vorhergehende Förderer das Werkstück auf einem Heber zwischen den beiden Vorrichtungen so ablegt, daß es der Förderer des nachfolgenden Werkzeuggestelles aufnehmen kann. Insbesondere bei U-förmig ausgebildeten Untergestellen kann ein Zwischenförderer mit Heber (beispielsweise eine Translationsschwinge) notwendig werden.

Gemäß einer vorteilhaften Weiterbildung der Erfindung kann die Energieversorgung und Steuerung der Werkzeuge in den Werkzeuggestellen durch Leitungen oder Kabel von einer oder mehreren Stellen über den Werkzeuggestellen erfolgen und zur Ermöglichung des Verfahrens der Werkzeuggestelle Kabelschleppeinrichtungen eingesetzt werden. Dadurch werden Kontaktschienen und komplizierte Übertragungseinrichtungen vermieden. Wenn die Kabel leicht lösbar an jedem Werkzeuggestell festgelegt sind, (beispielsweise durch Stecker oder Schnellkupplungen) lassen sich die Werkzeuggestelle schnell und kostengünstig demontieren. Weitere Arbeiten zum Ersatz eines Werkzeuggestells sind an sich nicht erforderlich.

Schließlich ist es vorteilhaft, wenn die Werkzeuggestelle über gefederte Kegelrollen auf dem Untergestell verschiebbar sind, wobei die Federn derart ausgelegt sein sollen, daß sie in ihrer Gesamtheit eine größere Kraft als die Gewichtskraft des Werkzeuggestelles aufbringen. Dadurch ist es beim Niederspannen des Werkzeuggestells nur erforderlich, daß die Spanneinrichtungen die Differenz zwischen beiden Kräften überwinden müssen. Diese Differenzkraft läßt sich durch die Wahl der Federn genau festlegen, so daß zum Spannen selbst nur geringe Kräfte notwendig sind.

Nachfolgend wird stichpunktartig die Arbeitsweise der erfindungsgemäßen Vorrichtung bei Einsatz einer automatischen Steuerung, die jedoch nicht näher beschrieben wird, dargestellt. Ausgehend von einer Vorrichtung mit einem mittleren, einem linken und einem rechten Abschnitt umfassen des Untergestell, wobei die Werkzeuggestelle je eine äußere Position auf dem linken bzw. rechten Abschnitt einnehmen, wird zunächst die Verfahreinheit auf das ausgewählte Werkzeuggestell zubewegt. In der Endstellung angekommen, erfolgt ein Abstecken, d.h. ein formschlüssiges Verbinden des Werkzeuggestells mit dem Mitnehmer der Verfahreinheit. Nach erfolgtem Abstecken zieht bzw. drückt die Verfahreinheit das Werkzeuggestell über den mittleren Abschnitt des Untergestells. Nun fahren zunächst die Zentriereinheiten aus dem Untergestell aus ; anschließend die Spanneinheiten, welche das Werkzeuggestell gegen den mittleren Abschnitt des Untergestells ziehen.

Nach erfolgter Fixierung des Werkzeuggestells auf dem mittleren Abschnitt des Untergestells findet eine Zentrierung des auf dem Werkzeuggestell angeordneten Werkstückhalters mit dem im Untergestell untergebrachten Aushebr statt. Dazu ist der Tisch des Aushebers mit einer entsprechen den Zentriereinrichtung versehen, welche mit der Bodenplatte des Werkstückhalters zusammenwirkt. An den Zentriervorgang schließt sich ein Verspannen beider Teile mittels einer separaten Spanneinrichtung an.

Nun kann des Aufnehmen des Werkstückes und das anschließende Bearbeiten beginnen. Dabei wird das zu bearbeitende Teil vor der Arbeitsstation in den im Werkzeuggestell angeordneten Förderer gelegt und vom Förderer in die Übernahmeposition des Werkstückhalters gebracht. Anschließend wird der Werkstückhalter durch den Aushebr hochgefahren, um das zu bearbeitende Teil aus dem Förderer zu übernehmen und es nach oben in die Bearbeitungsposition zu bringen. Während der Bearbeitung des Teiles kann der Förderer zurückfahren um nach Beendigung der Bearbeitung und dem Absenken des Werkstückhalters zum einen das bearbeitete Teil aus dem Werkzeuggestell herauszubewegen und ein neues Teil in das Werkzeuggestell einzubringen.

Soll zur Durchführung eines anderen Bearbeitungsganges oder zur Bearbeitung eines anders ausgebildeten Werkstückes das Werkzeuggestell gewechselt werden, dann geschieht dies dadurch, daß die Spanneinrichtungen und Zentrierungen des Aushebers und dann des Untergestells gelöst werden, die Verfahreinheit das nicht mehr benötigte Werkzeuggestell zur Seite bewegt und das neue Werkzeuggestell auf den mittleren Abschnitt des Untergestells verfährt. Zweckmäßig ist dabei, wenn die Verfahreinheit nur geradlinige Bewegungen ausführen muß. Bei U-förmig angeordneten Abschnitten des Untergestells sind deshalb mehrere Verfahreinheiten – beispielsweise Luftzylinder – notwendig.

Ein Ausführungsbeispiel der Erfindung ist in der Zeichnung dargestellt und wird nachfolgend näher beschrieben. Es zeigt

Fig. 1 die Vorderansicht einer Vorrichtung zum automatischen Bearbeiten unterschiedlich geformter Werkstücke,

Fig. 2 die Draufsicht der Vorrichtung aus Fig. 1 und

Fig. 3 die Seitenansicht der Vorrichtung aus Fig. 1.

Eine Vorrichtung zum automatischen Bearbeiten unterschiedlich geformter Werkstücke besteht aus einem Gestell 5 mit einem mittleren Abschnitt 7, einem linken Abschnitt 9 und einem rechten Abschnitt 11. Auf das Untergestell 5 sind Werkzeuggestelle 13 und 15 aufgesetzt. In ihren Abmessungen und Anschlüssen sind beide Werkzeuggestelle 13 und 15 baugleich. Sie bestehen aus einer Grundplatte 17, einer Kopfplatte 19 sowie die Grundplatte 17 und die Kopfplatte 19 verbindenden, senkrechten Säulen 21. An den Kopfplatten 19 sind die verschiedensten Werkzeuge 23 zum Bearbeiten eines Werkstückes befestigt. Bei der vorliegenden Vorrichtung sind dies hauptsächlich Schweißzangen.

Die Grundplatten 17 der Werkzeuggestelle 13 und 15 sind an ihrer Unterseite mit gefederten Kugelrollen 25 versehen, deren Federn so ausgelegt sind, daß sie in ihrer Gesamtheit eine größere Kraft als die Gewichtskraft des kompletten Werkzeuggestelles aufbringen, so daß das Werkzeuggestell leicht bewegt und mit geringer Kraft niedergespannt werden kann. Zum Niederspannen ist dabei nur eine Kraft erforderlich, welche der Differenz zwischen Feder- und Gewichtskraft entspricht.

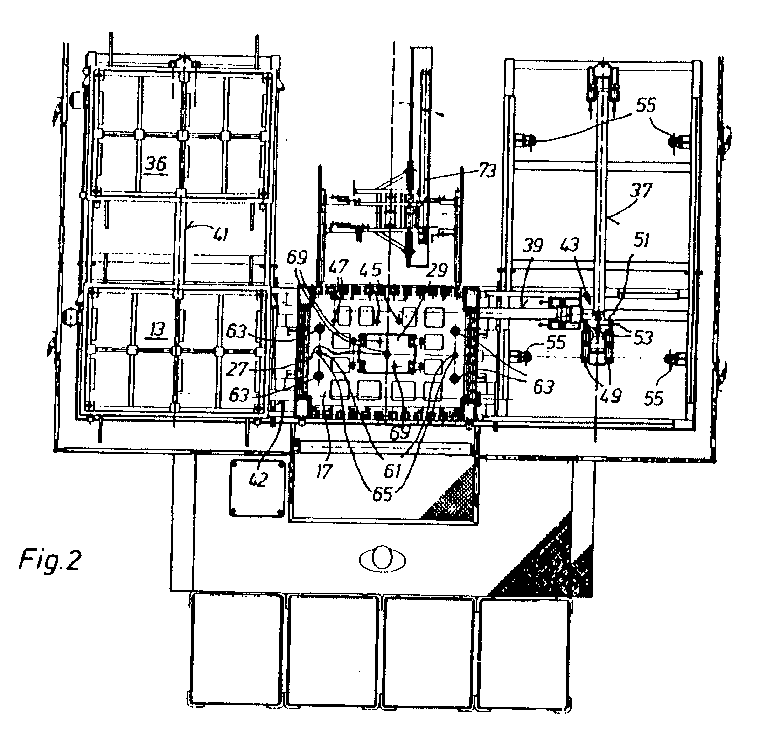

Wie die Figur 2 zeigt, ist im Mittenbereich der Grundplatte 17 des in dieser Figur näher dargestellten Werkzeuggestelles 15 eine rechtekkige Aussparung 27 vorgesehen. In diese Aussparung 27 ist die Bodenplatte 29 ein es Werkstückhalters 31 schwimmend auf Tellerfederpaketen in Verbindung mit Grobzentrierungen aufgenommen.

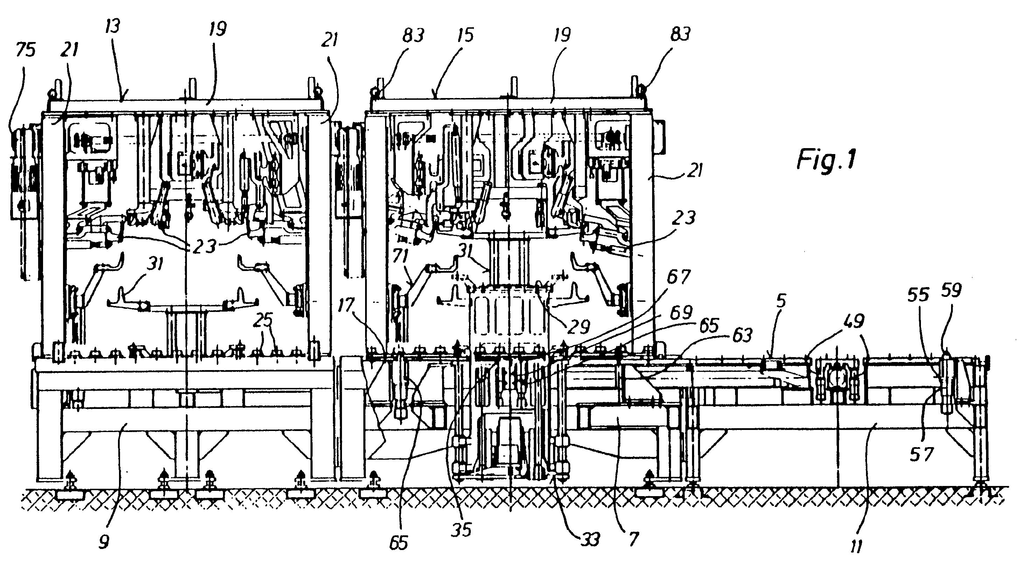

Der mittlere Abschnitt 7 des Untergestells 5 ist in seinem Bereich unter dem Werkstückhalter 31 mit einem Ausheber 33 ausgerüstet. Nach oben ist der Ausheber 33 durch einen Tisch 35 abgeschlossen (Fig. 1).

Wie die eine Draufsicht der Vorrichung wiedergebende Figur 2 zeigt, weist das Untergestell 5 einen U-förmigen Aufbau auf, welches insgesamt fünf Plätze zur Aufnahme von Werkzeuggestellen aufweist. Durch die fünf Plätze ist es möglich, insgesamt drei Werkzeuggestelle so zu verfahren, daß jedes Werkzeuggestell wahlweise zum Einsatz über den mittleren Abschnitt 7 des Untergestells 5 bewegbar ist. In der Zeichnung sind die Werkzeuggestelle 13 und 36 nur angedeutet, während das Werkzeuggestell 15 in Einzelheiten ohne Kopfplatte 19 und Werkzeuge 23 wiedergegeben ist.

Um die Werkzeuggestelle in gewünschter Weise über den mittleren Abschnitt 7 bewegen zu können, sind insgesamt vier Verfahreinheiten 37, 39, 41 und 42 vorgesehen. Diese Verfahreinheiten sind gekennzeichnet durch einen kolbenstangenlosen Zylinder mit pneumatischer Betätigung. Dadurch sind ohne Probleme auch größere Hübe (über 2 m) möglich. Jede Verfahreinheit weist einen Mitnehmer 43 auf, der in zugeordneten Bohrungen in der Grundplatte 17 der Werkzeuggestelle eingreifen kann. Jeder Mitnehmer 43 besteht zu diesem Zweck aus zwei Pneumatikzylindern 49, einer Mitnehmerplatte 51 und zwei Absteckbolzen 53. Zum Verfahren der Werkzeuggestelle wird der Mitnehmer 43 auf das Werkzeuggestell bis zu dessen Bohrungen 45 bzw. 47 bewegt, die Absteckbolzen 53 ausgefahren, d.h. in die Bohrungen 45 bzw. 47 eingeführt, und durch die Verfahreinheit, deren Hauptbestandteil ein pneumatisch wirkender, kolbenstangenloser Zylinder ist, in die gewünschte Position bewegt.

Ist diese Position nicht der mittlere Abschnitt 7, in dem die Bearbeitung durchgeführt wird, sondern ein anderer Abschnitt des Untergestells 5, dann wird dort das Werkzeuggestell über je zwei Absteckeinheiten 55 gesichert. Die Absteckeinheiten umfassen Hydraulikzylinder 57 und Zentrierspitzen 59 (Fig. 1), wobei letztere mit Bohrungen 61 in den Grundplatten der Werkzeuggestelle zusammenwirken. Befindet sich ein Werkzeuggestell (in der Zeichnung das Werkzeuggestell 15) über dem mittleren Abschnitt 7 des Untergestells 5, dann erfolgt durch die Zentriereinheiten eine genaue Festlegung der Werkzeuggestelle in ihrer Arbeitsposition. In der Arbeitsstellung werden die Werkzeuggestelle zusätzlich niedergespannt. Dies geschieht durch vier hydraulisch angetriebene Schwenkspannzylinder 63. Zum Niederspannen der auf federgelagerten Kegelrollen aufgenommenen Werkzeuggestelle ist (wie eingangs näher beschrieben) nur eine geringe Kraft erforderlich, so daß relativ klein dimensionierte Schenkspannzylinder 63 Verwendung finden können.

Ist das Werkzeuggestell 15 zentriert und fest mit dem Untergestell verbunden, dann wird in ähnlicher Weise die in der Aussparung 27 der Grundplatte 17 aufgenommene Bodenplatte 29 des Werkstückhalters 31 mit dem Tisch 35 des Aushebers 33 verbunden. Auch hier sind Zentriereinrichtungen 65 vorgesehen, die mit ihrer Spitzen in Bohrungen 67 in der Bodenplatte 29 eingreifen. Zum Niederspannen der Bodenplatte 29 auf den Tisch 35 ist eine zentrale Spanneinrichtung 69 vorgesehen, welche ebenfalls durch einen Schwenkspannzylinder gebildet ist.

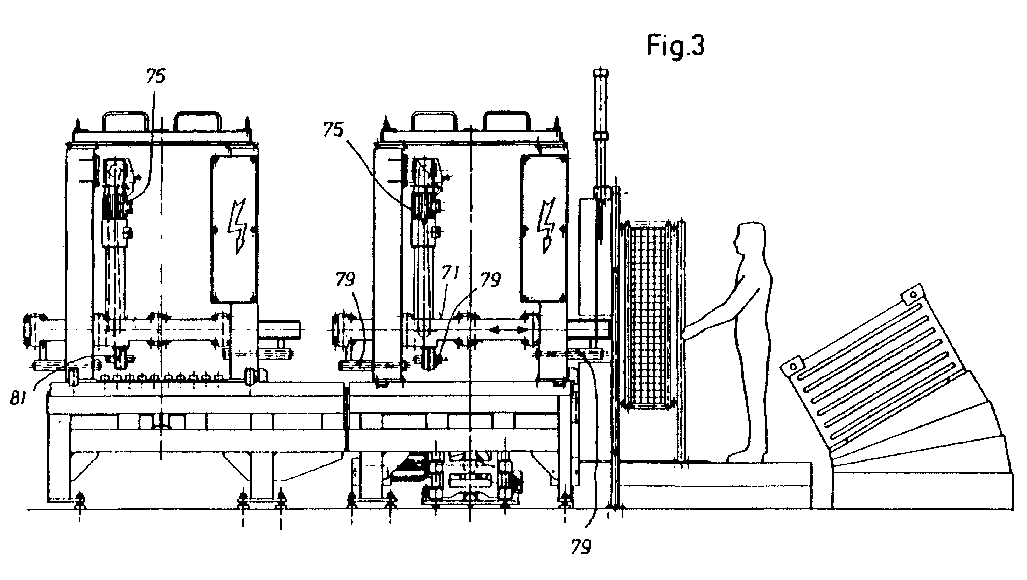

Nun kann der eigentliche Arbeitsvorgang durchgeführt werden. Zunächst erfolgt das Einlegen des Werkstückes in den Werkstückhalter 31. Dies kann entweder durch einen Werker erfolgen (siehe Fig. 3) oder selbsttätig mittels einer geeigneten Vorrichtung durchgeführt werden.

Anschließend wird das Werkstück in ihre Bearbeitungsposition nach oben bewegt. Dazu ist der im mittleren Abschnitt 7 im Untergestell 5 angeordnete Ausheber 33 vorgesehen. Der Ausheber 33 umfaßt einen elektromotorischen Antrieb in Form eines Drehstromstirnradflachgetriebemotors und eine Kurbel. Die Kontrolle der Hubbewegung geschieht mittels eines Präzisionsschalterwerkes. Nach Erreichen der Arbeitshöhe beginnen die Werkzeuge 23 mit der programmierten Bearbeitung des Werkstücks. In dem Ausführungsbeispiel gemäß der Zeichnung sind die Werkzeuge 23 hauptsächlich durch Schweißzangen gebildet.

Nach durchgeführter Bearbeitung senkt der Ausheber 33 den Tisch 35 und mit ihm den Werkstückhalter 31 ab. Dabei wird das bearbeitete Teil in der zurückgefahrenen Fördereinrichtung 71 abgelegt und von dieser dann aus dem Werkzeuggestell 15 herausgeführt. Dort wird es von einem Zwischenförderer übernommen, welcher das Teil auf die Förderein richtung der nächsten Bearbeitungsstation ablegt. Zwischenzeitlich kann der Werkstückschalter 31 erneut bestückt werden.

So wie jedes Werkzeuggestell einen Werkstückhalter zur Aufnahme eines bestimmten Werkstückes und angepaßte Werkzeuge aufnimmt, so ist auch jedes Werkzeuggestell mit einer angepaßten, eigenen Fördereinrichtung 71 ausgestattet.

Der Antrieb der Fördereinrichtung 71 besteht im wesentlichen aus einem polumschaltbaren Schneckengetriebemotor 75, den Fördergliedern mit Rollenböcken 77 sowie Nockenleisten 79, die mit einem Nockenschaltwerk 81 zur Steuerung des Förderschritts zusammenwirken.

Sollen in der gleichen Vorrichtung andere Bearbeitungsvorgänge am gleichen Werkstück durchgeführt werden oder die Bearbeitung eines anders geformten Werkstückes gewünscht sein, so muß die Vorrichtung nicht umgebaut werden, sondern nur ein anderes Werkzeuggestell in die Arbeitsposition über den mittleren Abschnitt 7 des Untergestells 5 verschoben werden.

Dazu ist es zunächst erforderlich, daß das sich in dieser Position befindliche Werkzeuggestell 15 – in der Zeichnung gemäß Fig. 1 – nach rechts bewegt wird. Vor dem Fahren dieses Schrittes müssen die Spanneinrichtung 69 gelöst, die Zentriereinrichtung 65 zurückgefahren (Werkstückhalter frei vom Ausheber 33) sowie die Schwenkspannzylinder 63 gelöst und die Absteckeinheiten 55 zurückgefahren werden (Grundplatte 17 des Werkzeuggestells 15 frei vom Untergestell 5). Nun können die Absteckbolzen 53 des Mitnehmers 43 in die Bohrungen 47 in der Grundplatte 17 eingreifer und die Verschiebebewegung durch die Verfahreinheit 39 durchgeführt werden. In der rechten Stellung angelangt erfolgt ein Sichern in dieser Stellung durch die Absteckeinheiten 55, welche wiederum in die Bohrungen 61 der Grundplatte 17 eingreifen. Durch die Verfahreinheit 37 ist es möglich, das Werkzeuggestell 15 im rechten Winkel zum eben durchgeführten Schritt in eine weiter entfernte Warteposition zu bewegen.

Nun bewegt sich die Verfahreinheit 42 auf das Werkzeuggestell 13 zu, koppelt an diesem an und zieht es in die Bearbeitungsposition über dem mittleren Abschnitt 7. In dieser Stellung werden dann die vorbeschriebenen Zentrier- und Spannvorgänge durchgeführt, so daß anschließend ein neuer Bearbeitungsdurchgang mit geänderten Werkzeugen erfolgen kann.

Die Werkzeuggestelle lassen sich nicht nur leicht mittels der Verfahreinheiten 37, 39, 41 und 42 auf dem Untergestell 7 so bewegen, daß stets eines der drei Werkzeuggestelle in die Arbeitsposition bringbar ist ; es ist ohne Probleme auch möglich, die Werkzeuggestelle vom Untergestell über die Ösen 83 abzunehmen. Die Werkzeuggestelle können dann bei anderen Vorrichtungen – die auch an anderen Orten stehen können – eingesetzt werden. Die Werkzeuggestelle wird man auch abnehmen, wenn die Werkzeuge 23 auf ein neues Werkstück eingerichtet werden müssen. Da die Werkzeuggestelle stets alle Werkzeuge und sogar die Fördereinrichtung zum Werkstücktransport enthalten, ist es möglich, das Einfahren bei einem neuen Werkstück außerhalb der Produktionslinie durchzuführen, so daß der eigentliche Fertigungsablauf nicht gestört wird.

Um einen leichten Austausch der Werkzeuggestelle zu ermöglichen, sind alle Leitungen zur Energieversorgung und zur Steuerung über Steckverbindungen (nicht dargestellt) an den Werkzeuggestellen leicht lösbar ausgeführt. Damit ohne großen Aufwand ein leichtes Verschieben der Werkzeuggestelle auf dem Untergestell gewährleistet ist, werden die genannten Leitungen von oben über Kabelschlepp den einzelnen Werkzeuggestellen zugeführt.

Die Steuerung der Vorrichtung ist nicht im einzelnen angesprochen, da diese in an sich bekannter Weise realisierbar ist. Wird ein Programm vorgegeben, dann kann die Vorrichtung einschließlich der erforderlichen Wechsel der Werkzeuggestelle vollkommen selbsttätig operieren. In Verbindung mit einer Bedienperson ist es möglich, daß diese nicht nur die Werkstücke einlegt, sondern auch die Befehle zum Wechsel der Werkzeuggestelle gibt.

## Ansprüche

1. Vorrichtung mit einer gesteuerten Werkzeugwechseleinrichtung zum automatischen Bearbeiten unterschiedlich geformter Werkstücke, mit folgenden Merkmalen :

a) ein aus einem mittleren (7) einem linken (9) und einem rechten Abschnitt (11) bestehendes Untergestell weist an seiner Oberseite eine Längsführung auf, mittels der wahlweise ein linkes (13) oder rechtes Werkzeuggestell (15) durch eine Verfahreinheit (37, 39, 41, 42) von ihrer äußeren Position in eine Stellung über den mittleren Abschnitt (7) des Untergestelles (5) bringbar und dort durch eine Zentriereinheit (65) und eine Spanneinheit (63) fixierbar ist,

b) jedes Werkzeuggestell (13, 15) umfaßt eine Grundplatte (17) mit einer Aussparung (27), in welche die Bodenplatte (29) eines Werkstückhalters (31) eingesetzt ist, eine Kopfplatte (19), die Grundplatte (17) mit der Kopfplatte (19) verbindende Säulen (21) sowie an der Kopfplatte (19) und/oder an den Säulen (21) befestigte Werkzeuge (23) ;

c) der mittlere Abschnitt (7) des Untergestells (5) weist einen Ausheber (33) mit einem ihn nach oben abschließenden Tisch (35) auf, wobei

– der Tisch (35) in seiner Abmessung kleiner als die Aussparung (27) in jeder Grundplatte (17) der Werkzeuggestelle (13, 15) ist,

– bei über dem mittleren Abschnitt (7) fixierten Werkzeuggestell (13, 15) der Tisch (35) mit der Bodenplatte (29) des Werkstückhalters (31) durch eine Zentriereinrichtung und Spanneinrichtung (69) verbindbar ist,

– der Werkstückhalter (31) durch den Ausheber (33) in eine Position bringbar ist, in der seine Bodenplatte (29) flächenbündig mit der sie umgebenden Grundplatte (17) abschließt.

d) der mit der Bodenplatte (29) des Werkstückhalters (31) verbundene Tisch (35) ist durch den mit einem gesteuerten Antrieb ausgerüsteten Ausheber (33) von einer unteren Einlegeposition in eine obere, ein Einwirken der Werkzeuge (23) auf das Werkstück ermöglichende Bearbeitungspositon bewegbar.

2. Vorrichtung nach Anspruch 1, **dadurch gekennzeichnet**, daß die Vorrichtung ein weiteres Werkzeuggestell umfaßt und zum wahlweisen Einsatz der drei Werkzeuggestelle das Untergestell (5) und die Verfahreinheit (37, 39, 41) über den linken (9) und den rechten Abschnitt (11) zur Bildung je einer zusätzlichen Standfläche für ein Werkzeuggestell hinaus verlängert ist.

3. Vorrichtung nach Anspruch 2, **dadurch gekennzeichnet**, daß die einzelnen Abschnitte des Untergestells (5) U-förmig angeordnet sind.

4. Vorrichtung nach einem der Ansprüche 1 bis 3, **dadurch gekennzeichnet**, daß jedes Werkzeuggestell (13, 15) mit einer eigenen Fördereinrichtung (71) versehen ist, durch welche das Werkstück selbsttätig aufnehmbar, und/oder in dem Werkstückhalter einlegbar und/oder nach erfolgter Bearbeitung aus der Vorrichtung herausbewegbar ist.

5. Vorrichtung nach Anspruch 4, **dadurch gekennzeichnet**, daß jedes Werkzeuggestell (13, 15) einen eigenen Antrieb (75) für die an ihm angeordnete Fördereinrichtung (71) aufweist.

6. Vorrichtung nach einem der Ansprüche 1 bis 5, **dadurch gekennzeichnet**, daß die Energieversorgung und Steuerung der Werkzeuge (23) in den Werkzeuggestellen (13, 15) durch Kabel von einer oder mehreren Stellen über den Werkzeuggestellen erfolgt und zur Ermöglichung des Verfahrens der Werkzeuggestelle (13, 15) Kabelschleppeinrichtungen eingesetzt sind.

7. Vorrichtung nach Anspruch 6, **dadurch gekennzeichnet**, daß die Kabel leicht lösbar an jedem Werkzeuggestell (13, 15) festgelegt sind.

8. Vorrichtung nach einem der Ansprüche 1 bis 7, **dadurch gekennzeichnet**, daß die Werkzeuggestelle (13, 15) über gefederte Kugelrollen (25) auf dem Untergestell (5) verschiebbar sind, wobei die Federn derart ausgelegt sind, daß sie in ihrer Gesamtheit eine größere Kraft als die Gewichtskraft des Werkzeuggestells (13, 15) aufbringen.

## Claims

1. Apparatus with a controlled tool changing mechanism for automatic machining of workpieces of various shapes, having the following features :

a) a lower frame consisting of a central (7), a left-hand (9) and a right-hand (11) section has on its upper surface a longitudinal channel by means of which a positioning unit (37, 39, 41, 42) is able to bring a left-hand (13) or right-hand (15) tool frame, as required, from its outside position into a position above the central section (7) of the lower frame (5), where said tool frame can be located by means of a centring unit (65) and a clamping unit (63),

b) each tool frame (13, 15) comprises a base plate (17) with a recess (27) into which the bottom plate (29) of a workpiece holder (31) is inserted, a top plate (19), columns (21) joining the base plate (17) to the top plate (19), and tools (23) attached to the top plate (19) and/or to the columns (21) ;

c) the central section (7) of the lower frame (5) has a lifter (33) with a platform (35) upwardly terminating same, wherein :

– the platform (35) is smaller in size than the recess (27) in each base plate (17) of the tool frames (13, 15),

– when the tool frame (13, 15) is located above the central section (7), the platform (35) can be joined to the bottom plate (29) of the workpiece holder (31) by a centring device and clamping device (69),

– the workpiece holder (31) can be brought by the lifter (33) into a position in which its bottom plate (29) adjoins the surrounding base plate (17) with their surfaces flush,

d) the platform (35) joined to the bottom plate (29) of the workpiece holder (31) can be moved by the lifter (33), which is equipped with a controlled drive, from a lower insertion position into an upper machining position which enables the tools (23) to act on the workpiece.

2. Apparatus according to claim 1, characterised in that the apparatus comprises an additional tool frame and that for use of the three tool frames, as required, the lower frame (5) and the positioning unit (37, 39, 41) extends beyond the left-hand (9) and the right-hand (11) section to form a respective supporting surface for a tool frame.

3. Apparatus according to claim 2, characterised in that the individual sections of the lower frame (5) are arranged in a U-shape.

4. Apparatus according to one of claims 1 to 3, characterised in that each tool frame (13, 15) is provided with its own conveyor (71), by means of which the workpiece can be automatically picked up, and/or placed in the workpiece holder and/or withdrawn from the apparatus once the machining operation is finished.

5. Apparatus according to claim 4, characterised in that each tool frame (13, 15) has its own drive (75) for the conveyor (71) mounted thereon.

6. Apparatus according to one of claims 1 to 5, characterised in that the energy supply to, and control of, the tools (23) in the tool frames (13, 15) is by way of cables from one or more points above the tool frames and cable trailing gear is used to enable the tool frames (13, 15) to be positioned.

7. Apparatus according to claim 6, characterised in that the cables are readily detachably fixed on each tool frame (13, 15).

8. Apparatus according to one of claims 1 to 7, characterised in that the tool frames (13, 15) can be moved by means of spring-mounted ball castors (25) on the lower frame (5), the springs being designed such that in their totality they exert a greater force than the force of the weight of the tool frame (13, 15).

## Revendications

1. Installation avec un dispositif commandé de changement d'outils pour l'usinage automatique de pièces de formes différentes, ayant les caractéristiques suivantes :

a) un bâti inférieur, se composant d'une partie médiane (7), d'une partie gauche (9) et d'une partie droite (11), présente à sa face supérieure une glissière longitudinale, au moyen de laquelle un bâti porte-outils gauche (13) ou droit (15) au choix peut être déplacé par l'intermédiaire d'une unité de déplacement (37, 39, 41, 42) depuis sa position extérieure jusqu'à une position au-dessus de la partie médiane (7) du bâti inférieur (5) et être fixé à cet endroit au moyen d'une unité de centrage (65) et d'une unité de serrage (63) ;

b) chaque bâti porte-outils (13, 15) comprend une assise (17) avec un évidement (27), dans lequel la plaque de base (29) d'un porte-pièce (31) est insérée, une plaque supérieure (19), des colonnes (21) reliant l'assise (17) à la plaque supérieure (19), ainsi que des outils (23) fixés à la plaque supérieure (19) et/ou aux colonnes (21) ;

c) la partie médiane (7) du bâti inférieur (5) comporte un élévateur (33) qui se termine vers le haut par une table (35), où

     – la table (35) est dans son dimensionnement plus petite que l'évidement (27) dans chaque assise (17),

     – la table (35) peut être raccordée à la plaque de base (29) du porte-pièce (31) par l'intermédiaire d'un dispositif de centrage et d'un dispositif de serrage (69) lorsque le bâti porte-outils (13, 15) est fixé au-dessus de la partie médiane (7),

     – le porte-pièce (31) peut être amené à l'aide de l'élévateur (33) dans une position dans laquelle sa plaque de base (29) se raccorde au ras de l'assise (17) qui l'entoure ;

d) la table (35) reliée à la plaque de base (29) du porte-pièce (31) est déplacée par l'élévateur (33) équipé d'une commande asservie depuis une position de changement inférieure à une position d'usinage supérieure permettant la mise en oeuvre des outils (23) sur la pièce.

2. Installation suivant la revendication 1, caractérisée en ce que l'installation comprend un autre bâti porte-outils et que le bâti inférieur (5) et l'unité de déplacement (37, 39, 41) sont rallongées au-dessus de la partie gauche (9) et de la partie droite (11) pour former une surface d'appui supplémentaire pour un bâti porte-outils, afin de pouvoir mettre en oeuvre au choix les trois bâtis porte-outils.

3. Installation suivant la revendication 2, caractérisée en ce que les parties individuelles du bâti inférieur (5) sont disposées en forme de U.

4. Installation suivant l'une des revendications 1 à 3, caractérisée en ce que chaque bâti porte-outils (13, 15) est muni de son propre dispositif convoyeur (71), par lequel la pièce est automatiquement prise, et/ou placée dans le porte-pièce et/ou, une fois l'usinage terminé, évacuée de l'installation.

5. Installation suivant la revendication 4, caractérisée en ce que chaque bâti porte-outils (13, 15) possède une commande propre (75) pour le dispositif convoyeur (71) qui lui est fixé.

6. Installation suivant l'une des revendications 1 à 5, caractérisée en ce que l'alimentation en énergie et la commande des outils (23) dans les bâtis porte-outils (13, 15) sont effectuées par l'intermédiaire de câbles depuis un ou plusieurs emplacements au-dessus des bâtis porte-outils et que des chaînes de transmission d'énergie sont prévues pour permettre le déplacement des bâtis porte-outils (13, 15).

7. Installation suivant la revendication 6, caractérisée en ce que les câbles sont fixés à chaque bâti porte-outils (13, 15) d'une manière aisément amovible.

8. Installation suivant l'une des revendications 1 à 7, caractérisée en que les bâtis porte-outils (13, 15) se déplacent sur le bâti inférieur (5) au moyen de rouleaux à billes (25) montés sur ressorts, les ressorts étant dimensionnés de telle manière que, pris collectivement, ils mettent en oeuvre une force supérieure à la force de gravité du bâti porte-outils (13, 15).

Fig.1

EP 0 290 469 B1

Fig.2

Fig.3